# EUROPEAN PATENT APPLICATION

(11) **EP 4 053 526 A1**
(43) Date of publication of application: **07.09.2022**
(21) Application number: 20881836.9
(22) Date of filing: 30.10.2020
(51) Int. Cl.: G01K 13/20, G01K 7/25, G01K 15/00

(54) **TEMPERATURE SENSOR CORRECTION METHOD**

(30) Priority: 31.10.2019 JP 2019199233
(71) Applicant: Try and E Co., Ltd., Kobe-shi, Hyogo 651-1505 (JP)
(72) Inventor: FUJII, Takahiro, Kobe-Shi, Hyogo 651-1505 (JP)
(74) Representative: Horn Kleimann Waitzhofer Patentanwälte PartG mbB
(86) International application number: PCT/JP2020/040803
(87) International publication number: WO 2021/085596

(57) **Abstract**

Issue: The present invention has as an object to make available a temperature-sensor calibrating method that enables the thermometer main unit of a wearable clinical thermometer to be reused by having its temperature sensor be detachable from/reattachable into the thermometer main unit and calibrating the temperature sensor whenever a temperature sensor is substituted in, enabling the temperature sensor alone to be made disposable.

Resolution Means: In order to accomplish the just-stated object, a temperature-sensor calibrating method involving the present invention is characterized in comprising, with a corresponding information-recording medium being a constituent element of the temperature sensor: a base-resistance acquisition step of acquiring base resistance values having been sampled on a per-temperature-sensor basis inside a constant-temperature tank; a computation step of computing for the temperature sensor, based on the difference between the base resistance values and resistance values derived, utilizing the B constant, from actual temperatures gauged with a standard temperature gauge inside the constant-temperature tank during the sampling, a value designating a calibration coefficient; a storage step of storing in the information-recording medium the value designating a calibration coefficient; and a data-loading step of causing a terminal to read in body temperature, the value designating a calibration coefficient from the information-recording medium.

## Description

### TECHNICAL FIELD

The present invention relates to a method of calibrating temperature sensors that detachably/reattachably fit into a wireless data-communicating clinical-thermometer main unit, and are for sensing a target subject's body heat to measure his/her temperature.

### BACKGROUND ART

In hospitals and other medical institutions, patients' body temperatures are periodically measured, and the measurement results are administered. Generally, in measuring body temperature, the thermometer is applied to a measurement region on the examinee and for a fixed period of time until the measurement finishes is kept in a still state, and when the measurement finishes the measurer checks and records the measurement result. In cases where the examinee is an infant or a seriously ill patient, however, continuing to apply the thermometer to the measurement region can be challenging, such that carrying out an accurate body-temperature measurement is not a simple matter; what is more, with newborn babies and infants, at times, such as during the night, when the body temperature abruptly changes, the changes must be grasped objectively by chronologically gauging the body temperature.

Moreover, the job of checking and recording the measurement results places a high burden on the measurer, such that lightening the load on the measurer has been desired.

While interest in medical technologies that take advantage of portable computers, smartphones, and tablet computers has been on the rise in recent years, so-called wearable devices for gauging body temperature have already been developed, whereby checking and recording, via wireless communication means, measurement results from having measured body temperature has become possible.

As to the body-temperature measurement/recording device set forth in Patent Document 1, a body-temperature logging patch ("patch" in the following)-a wearable clinical thermometer-that chronologically accumulates a patient's body temperature in a memory is proposed.

With this body-temperature measurement device, the patch can be fitted onto the body of a patient-for example, onto the forehead, trunk, arms, legs, or other location on the body-and through a plurality of sensors a plurality of temperatures in the same positions or in different positions on the patient can be sensed, and further, checking and recording, via a wireless communication means, measurement results from having measured body temperature is possible.

### Precedent Technical Literature

### Patent Documents

Patent Document 1: Japanese Nat'l. Stage App. Pub. No. JP 2016-505808 A

### SUMMARY OF INVENTION

### Issues Invention Is to Address

Nevertheless, the patch involving Patent Document 1 is a disposable product, and for the user, making it disposable puts the cost high. Therein, an object of the present invention, taking the above-described circumstances into consideration, is to make available a temperature-sensor calibrating method that enables reuse of the portions of a wearable clinical thermometer apart from the temperature sensor by having the temperature sensor be detachable from/reattachable into the thermometer main unit, and making it so that whenever a temperature sensor is substituted in, the output from the temperature sensor is calibrated to yield correct gauged temperature, enabling costs due to post-use discarding to be reduced.

### Means for Addressing the Issues

In order to accomplish the just-stated objective, a temperature-sensor calibrating method involving the present invention-being a method for calibrating a temperature sensor that fits detachably from/reattachably into a thermometer main unit of a wireless-data-communicating wearable clinical thermometer and is for sensing a target subject's body temperature and measuring the temperature, wherein the wearable clinical thermometer is made up of a thermometer main unit, and a temperature sensor constituted from an NTC thermistor, and the temperature sensor possesses a corresponding information-recording medium as a constituent element-is characterized in comprising: a base-resistance acquisition step of acquiring base resistance values having been sampled on a per-temperature-sensor basis inside a constant-temperature tank; a computation step of computing for the temperature sensor, based on differences between the base resistance values and resistance values derived, utilizing the B constant, from actual temperatures gauged with a standard temperature gauge inside the constant-temperature tank during the sampling, a value designating a calibration coefficient; a storage step of recording in the information-recording medium the value designating a calibration coefficient; and a data-loading step of causing a terminal that allows a user to visually and/or auditorily check body temperature to read in the value designating a calibration coefficient from the information-recording medium.

Here, the information-recording medium may be a tag made up of an antenna and a wireless-communications IC for transmitting radio waves via the antenna, wherein the data read-in step may be made a step of transmitting from the tag, employing standard NFC communications protocols, to the terminal the value designating a calibration coefficient. Also, the tag can be provided either in a location of choice on the temperature sensor that fits onto the wearable clinical thermometer, or in a location of choice along a package for, or on an item packaged in, the temperature sensor that fits onto the wearable clinical thermometer.

Also, the information recording medium may be a bar code, and the data-loading step may be configured to be a step of causing, with a data-scanning unit in the terminal, the terminal to read in data-the value designating the calibration coefficient-from the bar code.

Further, the method may be rendered so that in a computation medium in the terminal, based on the value designating the calibration coefficient, relationships between the base resistance values and actual temperatures are calculated to prepare a resistance-temperature conversion table, and the prepared resistance-temperature table is recorded in the information-recording medium in the terminal. It is then possible that the resistance-temperature conversion table be reprepared by being computed according to the value designating the calibration coefficient, and recorded in an overwritable information recording medium in the terminal. Still further, the method may be rendered so that in the computation medium in the terminal, based on advance-estimated values designating calibration coefficients, relationships between the base resistance values and actual temperatures are calculated to prepare a plurality of resistance-temperature conversion tables, and the prepared plurality of the resistance-temperature conversion tables is recorded in the information-recording medium in the terminal. In that case, the method may be rendered so that the data-loading step transmits from the tag, employing standard NFC communications protocols, to the terminal information designating the resistance-temperature conversion tables, and may be rendered so as to cause, with a data-scanning unit in the terminal, the terminal to read in data-information designating the resistance-temperature conversion tables-from the bar code.

### EFFECTS OF THE INVENTION

According to a temperature-sensor calibrating method involving the present invention, in implementations having a temperature sensor be detachable from/reattachable into a clinical thermometer main unit, whenever a temperature sensor is substituted in, the temperature sensor is calibrated, enabling reuse of a wearable clinical thermometer, and enabling the thermometer main unit to be made disposable following multiple cycles of use.

### BRIEF DESCRIPTION OF DRAWINGS

- Fig. 1: is a flowchart of a temperature-sensor calibrating method involving the present invention.
- Fig. 2: is diagrams representing the structure of a clinical-thermometer main unit, and a wearable clinical thermometer.
- Fig. 3: is a schematic diagram representing, in a communications transceiver of the clinical-thermometer main unit, a system for receiving body-heat measurement temperatures.
- Fig. 4: is a schematic diagram representing, in a communications transceiver of the clinical-thermometer main unit, a different system for receiving body-heat measurement temperatures.
- Fig. 5: is a schematic diagram representing, in a communications transceiver of the clinical-thermometer main unit, a still different system for receiving body-heat measurement temperatures.
- Fig. 6: is a flowchart involving Embodiment Example 2 of a temperature-sensor calibrating method involving the present invention.
- Fig. 7: is a flowchart involving Embodiment Example 3 of a temperature-sensor calibrating method involving the present invention.

### MODE(S) FOR IMPLEMENTING INVENTION

In the following, based on the drawings, a detailed description of modes of embodying the present invention will be made. In each figure, identical parts are labeled with identical numbers, such that reduplicating description will be omitted. Further, the drawings in some instances are expressed exaggeratedly for the sake of understanding the present invention, wherein it should be borne in mind that they are not necessarily scaled-down, minute representations. Also, the present invention is not limited to the embodying modes illustrated in the following.

### Embodiment Example 1

Embodiment Example 1 will be described in detail with reference to the drawings.

The fact that, as stated above, there are individual differences in the characteristics of temperature sensors of electronic clinical thermometers makes it necessary to establish calibrations (compensations) for electronic clinical thermometers severally on a per-device basis-that is, to find calibration coefficients for the temperature sensors respectively with their individual differences-and carry out writing of the calibration coefficients into a built-in memory. With thermistors that are utilized as temperature sensors generally, according to the way in which the resistance value changes, there are NTC thermistors and PTC thermistors, wherein with NTC thermistors when the temperature rises the resistance falls, while with PTC thermistors up until a given temperature the resistance is constant and at the boundary of the given temperature the resistance abruptly goes high.

In Embodiment Example 1, the temperature sensor 20 utilized in the wearable clinical thermometer 1 will be described on the premise that an NTC thermistor is utilized.

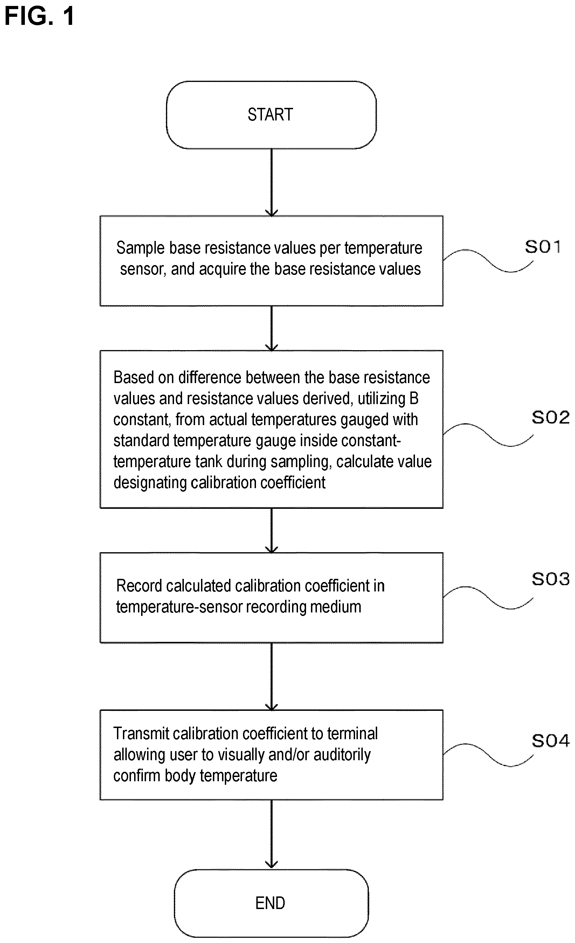

Reference is made to Fig. 1. Fig. 1 is a flowchart of a method, involving the present invention, of calibrating a temperature sensor 20.

As indicated in Fig. 1, the temperature-sensor 20 calibrating method involving the present invention comprises: a base-resistance acquisition step (S01) of sampling base resistance value per each of temperature sensors, which fit detachably from/reattachably into a wireless-data-communicating wearable clinical thermometer 1 and are for sensing a target subject's body heat and measuring the temperature, and of acquiring the base resistance values; a computation step (S02) of computing, based on differences between the acquired base resistance values and resistance values derived, utilizing the B constant, from actual temperatures gauged with a standard temperature gauge inside a constant-temperature tank during the sampling, a value designating a calibration coefficient; and a storage step (S03) of recording the calibration coefficient in an information-recording medium for the temperature sensor; and is characterized in that (S04) the calibration coefficient is transmitted to a terminal that allows a user to visually and/or auditorily check body temperature.

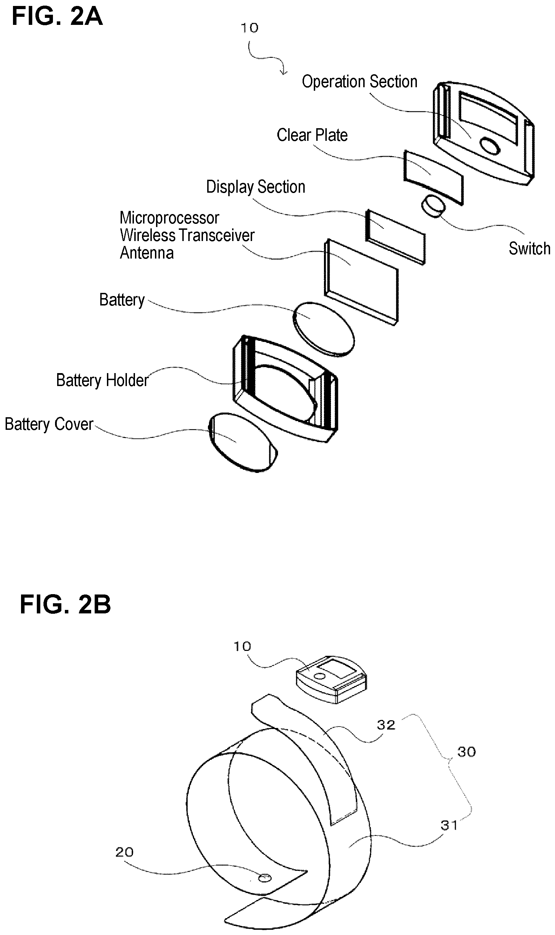

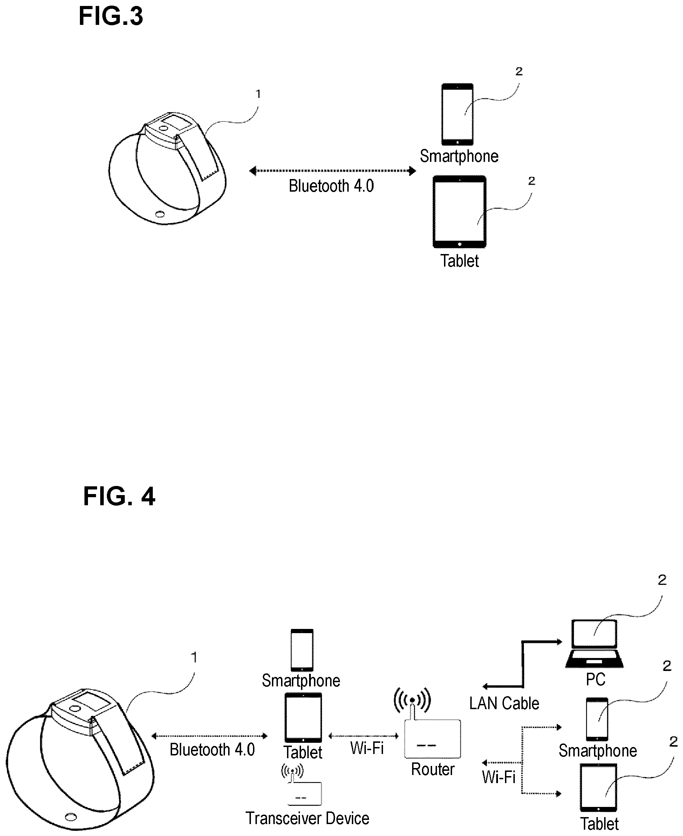

Reference is made to Fig. 2. Fig. 2 is diagrams representing the structure of a clinical-thermometer main unit, and the wearable clinical thermometer 1. Herein, the wearable clinical thermometer 1 will be described in detail. As indicated in Fig. 2(b), the wearable clinical thermometer 1 involving Embodiment Example 1 is designed as a wristwatch model, and comprises a thermometer main unit 10, and a thermometer retaining component 30 that retains the thermometer main unit 10. The thermometer retaining component 30 comprises a thermometer main-unit fastening belt 32 and a belt 31. Onto a location of choice along the inner side of the belt 31, a temperature sensor 20 configured to sense a target subject's temperature can be fitted detachably/reattachably. Accordingly possible is the user post-use discarding the belt 31, the thermometer main-unit fastening belt 32, and a later-described temperature sensor 20 as a single unit. What is more, the temperature sensor 20 alone can be rendered detachable/reattachable. The wearable clinical thermometer comprises, in a location of choice thereon, a tag made up of an antenna and a wireless-communications IC for transmitting radio waves via the antenna, and a temperature sensor constituted from an NTC thermistor. The tag, as indicated in later-described Figs. 3 to 5, is capable of transmitting via NFC to a terminal 2 that can receive and check body temperatures measured with the wearable clinical thermometer 1. NFC is a communications scheme characterized in that information written in advance into a medium can be transmitted, without requiring supplying of power on the transmitting end, to a receiving end (data reading end). In Embodiment Example 1, into the information-recording medium provided for the temperature sensor 20, a calibration coefficient is written in advance (step S03 in Fig. 1).

Further, as indicated in Fig. 2(a), built into the thermometer main unit 10 are basically a microprocessor, which is furnished with a battery, a computation medium, and a storage medium, and a wireless communications transceiver and an antenna, wherein the battery supplies electric power to the microprocessor and the temperature sensor.

It should be noted that in the present invention, the thermometer main unit 10 may be furnished with, or may not be furnished with, a body-temperature checking unit; it is sufficient if the terminal 2 to which the calibration coefficient is transmitted is provided with a body-temperature checking unit.

Fig. 3 is a schematic diagram representing an illustrative system in which from the wearable clinical thermometer 1, body-heat measurement temperature information (gauged resistance values themselves or temperature data corresponding to gauged resistance values) is transmitted, and in the terminal 2 the body-heat measurement temperature is received. The terminal 2 comprises at least a body-temperature checking unit, a computation medium, and an information-recording medium. The terminal 2 further comprises an NFC reader that receives calibration coefficients transmitted from tags, and a wireless communications receiver that receives pre-calibration temperature data (gauged resistance values themselves or temperature data corresponding to gauged resistance values).

During body-temperature measurement in the terminal 2, a calibration coefficient received with the NFC reader is utilized to perform computation on the pre-calibration temperature data received with the wireless communications receiver, whereby an accurate calibrated figure for the actual temperature can be obtained.

In the computation medium in the terminal 2, on the basis of the calibration coefficient transmitted from the NFC transmission section for the temperature sensor 20, in advance relationships between base resistance values and actual temperatures are calculated to prepare a resistance-temperature conversion table, and the resistance-temperature conversion table is recorded in the information-recording medium in the terminal 2. With such a table having been prepared, during body-temperature measurement, the terminal 2, simply by referring to the table, can obtain a figure for the actual temperature without making the computation every time, which therefore can serve to curtail the time till the temperature is checked and reduce costs.

It should be noted that in cases where a single resistance-temperature conversion table as mentioned earlier is prepared and recorded, it is desirable that the resistance-temperature conversion table be reprepared by computing in accordance with a calibration-coefficient value and be recorded in a rewritable storage device. That is, overwriting the table recorded in the information-recording medium is desirable.

Further, on the basis of calibration coefficients estimated in advance, relationships between base resistance values and actual temperatures are calculated, to prepare and record a plurality of resistance-temperature conversion tables. A plurality of tables having thus been prepared enables selecting a resistance-temperature conversion table suited to a calibration coefficient transmitted from a tag, making it unnecessary to compute in accordance with the transmitted calibration coefficient to reprepare a resistance-temperature conversion table, thereby reducing computation cost. It should be noted that a "resistance-temperature conversion table suited to a calibration coefficient" means the table that approximates best among a plurality of tables, and may be paraphrased as substituting with approximate values.

In Embodiment Example 1, while the belt 31, the thermometer main-unit fastening belt 32 and the temperature sensor 20 are rendered into a configuration making them removable/reattachable and disposable as a single unit, a configuration making the temperature sensor 20 alone removable/reattachable and disposable is possible; they are not limited to these configurations.

Also, in Embodiment Example 1, while the temperature sensor 20 and the tag are in a single-unit configuration, in implementations in which the belt 31, the thermometer main-unit fastening belt 32, and the temperature sensor 20 are configured so that they my be post-use discarded as a single unit, a configuration in which the tag alone is furnished on the belt 31 or on the thermometer main-unit fastening belt 32 is possible; and also possible, for when the disposable component (in implementations of Embodiment Example 1, a component in which the belt 31, the thermometer main-unit fastening belt 32, and the temperature sensor 20 are rendered as a single unit) is replaced, is furnishing a tag in a package or handling instructions for the fresh component. A configuration, not limited to the above-described examples, in which a tag is furnished in an area where an individual temperature sensor 20 may be identified is possible.

As described earlier, the measured temperature data (gauged resistance values themselves or temperature data corresponding to gauged resistance values) can be transmitted to a terminal 2 for checking body temperature, the actual temperatures calculated-with the user checking them on said terminal-and chronologically the actual temperatures can be output (printed, e-mailed, etc.) in a chart, and meanwhile a past trends graph may be enabled to be called up according to date and time settings. Also, alarms can be established on a per-patient basis auditorily or visually, or else both ways. Configuring desired settings is recommendable-for example, for auditory, selecting from among a terminal's built-in system sounds, or for colors, changing a portion of the screen or the background to a red (yellow) color. Furthermore, en-masse managing body temperature data for a plurality of patients with software makes handling easy.

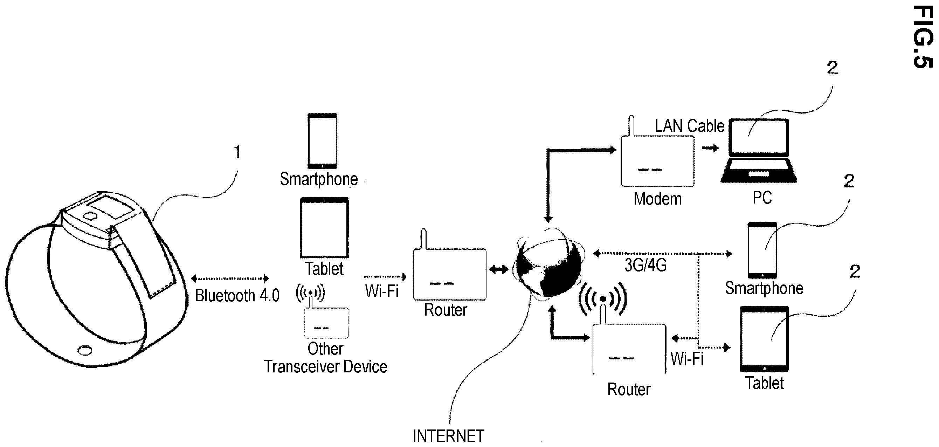

Figs. 4 and 5 are schematic diagrams representing, in a communications transceiver of the clinical-thermometer main unit 10, an illustrative system for receiving body-heat measurement temperatures. As indicated in Figs. 4 and 5, measured temperature data (gauged resistance values themselves or temperature data corresponding to the gauged resistance values) can be received through a dedicated terminal 2, while as the terminal 2, a PC, a smartphone, a tablet computer, or the like that may be operated employing conforming wireless communications protocols are exemplarily illustrative. The terminal is furnished with a programmable microprocessor that may execute applications, a power source, a display, and a wireless communications transceiver that is two-way communicable with the clinical-thermometer main unit 10. Preferably, being able to communicate on the Internet system of networks, a local area network (LAN), or a wide-area network (WAN) is desirable. Measured temperature data (gauged resistance values themselves or temperature data corresponding to gauged resistance values), or calibrated and obtained actual temperatures, can be obtained in response to a request and/or at intervals established beforehand, and can be stored locally into the memory of the readout device (e.g., smartphone, tablet computer, portable computer, sensor, etc.).

A transmitted calibration coefficient (information designating a calibration coefficient) can be read out by means of a standard smartphone, tablet computer, PC, etc. that may operate employing a conforming high-frequency/near-field communication NFC wireless protocol as well as the ISO-15693 RFID wireless protocol. For example, in situations in which it is desired to fit the wearable clinical thermometer 1 onto a certain person, and afterwards to fit it onto a different person, the temperature sensor including the belt, which are the components that contact a person's skin, presumably would be replaced. Utilizing a smartphone 2 that is highfrequency/near-field communication NFC as well as ISO-15693 RFID compliant to read a calibration coefficient for a new temperature sensor, makes it possible to gauge, in that smartphone 2, transitions in body temperature (calibrated actual temperature) of a patient on whom the wearable clinical thermometer 1 possessing a new temperature sensor is fitted. Near-field communication (NFC) enables smartphones and the like to set up mutual wireless communications by the devices being brought into contact with each other or otherwise near each other. The NFC standards comprehend communications protocols and data exchange formats, and are based on preexisting radio frequency identification (RFID) standards including ISO/IEC 14443, ISO/IEC 15693, and FeliCa (registered trademark). NFC operates at speeds within a range of from 106 kbit/s to 424 kbit/s at 13.56 MHz, based on the ISO/IEC 18000-3 air interface.

In this way, when the wearable clinical thermometer 1 is to be fitted onto a different patient, with not the entirety being made disposable, only the components, including the temperature sensor, that touch a person's skin are able to be made disposable, which can serve to reduce costs.

The wearable clinical thermometer 1 is designed so that its wireless communications transceiver is equipped with Bluetooth and NFC, and so that outputting of temperature data (gauged resistance values themselves or temperature data corresponding to gauged resistance values) is carried out via Bluetooth, and calibration (compensation) of a temperature sensor 20 is via NFC. Taking advantage of NFC in this way enables calibration of the temperature sensor 20 to be carried out easily, without the necessity of going through any number of procedures or inputting passcodes, by simply touching the tag with for example a smartphone.

While wireless data communications for transmitting/receiving temperature data (gauged resistance values themselves or temperature data corresponding to gauged resistance values) have been mentioned, it should be understood that regarding the protocols therefor, various other wireless communications protocols, including standards-based protocols and proprietary-specification protocols, can be used. For example, any or all among RFID, Bluetooth (registered trademark), Wi-Fi (registered trademark) etc. can be employed.

A description of the display (body-temperature checking unit) on terminal 2 will be made.

To begin with, screen configurations that are displayed to permit a user to check visually include: a device-registration and patient-parameter input screen; a list monitoring screen; a current time display; a body-temperature display; alarm-setting figures, patient-name, room-number, and bed-number display; an alarm cutoff button; a selection monitoring screen; a current time display; a trend graph; a display with alarm-set yes/no, alarm cutoff button, and total patient parameters; past trends-graph summons according to date and time settings; and as preferences screens of all sorts, alarm tone selection, and setting of alarm cutoff time.

Furthermore, the body-temperature checking unit in the terminal 2 may be rendered to generate sound by means of a speaker, to enable auditory checking, as opposed to checking visually. For example, the terminal 2 may be provided with, as the body-temperature checking unit, a sound generation unit containing a speaker, or be rendered so that an external speaker connects to the terminal 2. The sound generation unit may be rendered so as to output the above-described screen-configuring elements as sounds, with the user checking auditorily.

Once again, the flow of a method, involving the present invention, of calibrating a temperature sensor 20 will be explained. To begin with, the base-resistance acquisition step (S01) is a step of sampling, on a per-temperature-sensor basis, base resistance values, and acquiring the base resistance values. The sampling is favorably carried out on a temperature sensor that attaches into the wearable clinical thermometer 1, together with a standard temperature gauge, inside a constant-temperature bath at 37°C.

Next, the calculation step (S02) of calculating the calibration coefficient is a step of calculating a calibration coefficient for calibrating temperature, based on the difference between the base resistance values acquired in the step (S01) of acquiring base resistances of temperature sensors 20, and resistance values derived, utilizing the B constant, from actual temperatures gauged with a standard temperature gauge inside the constant-temperature tank during the sampling. This exploits being able to find the resistance value from temperature using the thermistor's B constant, and conversely, being able to find temperature from the resistance value.

Then, the calibration coefficient calculated in the calculation step (S02) is recorded (S03) in the information-recording medium for the temperature sensor. This is a step that corresponds to the writing, in Embodiment Example 1, of a calibration coefficient into a tag.

The calibration coefficient recorded in the information-recording medium in the storage step (S03) is transmitted (S04) to a terminal that allows a user to visually and/or auditorily check body temperature.

### Embodiment Example 2

Embodiment Example 2 will be described in detail with reference to the drawings. In Embodiment Example 2, a description of only what differs from Embodiment Example 1 will be set forth. Other than what is set forth in Embodiment Example 2 is the same as with Embodiment Example 1.

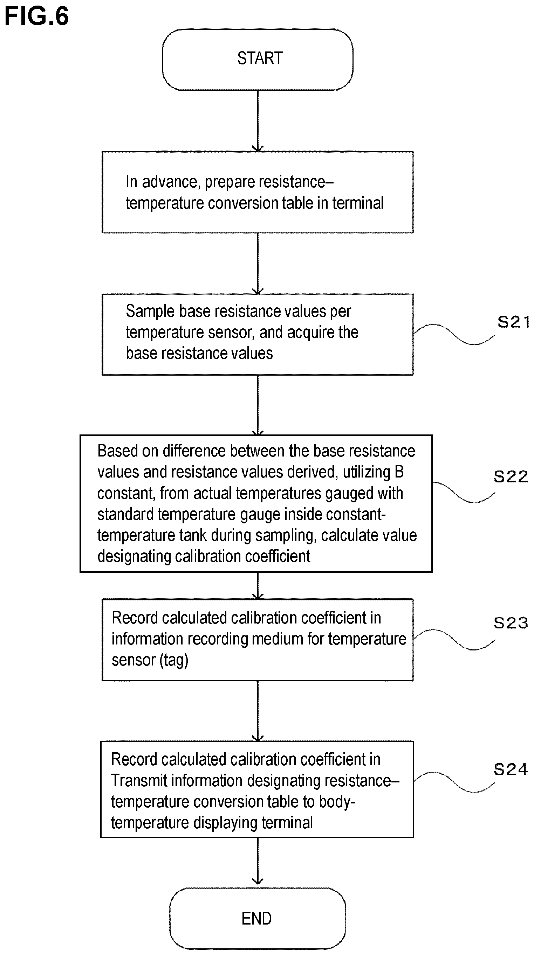

Reference is made to Fig. 6. Fig. 6 is a flowchart, different from Fig. 1, of a method, involving the present invention, of calibrating a temperature sensor 20. As indicated in Fig. 6, a temperature-sensor 20 calibration method involving the present invention comprises:
in order to sense a target subject's body temperature and measure the temperature,
in advance, in a computation medium of the terminal 2, calculating relationships between base resistance values and actual temperatures based on a calibration coefficient and thereby preparing a resistance-temperature conversion table; and
on top of that, a base-resistance acquisition step (S21) of sampling base resistance values on a per-temperature-sensor basis, and of acquiring the base resistance values, a calculation step (S22) of calculating, based on the difference between the acquired base resistance values and resistance values gauged with a standard temperature gauge, a calibration coefficient for calibrating temperature, and a storage step (S23) of recording in the information-recording medium information designating a resistance-temperature conversion table corresponding to the calibration coefficient;
characterized in that (S24) an NFC component transmits the information designating the resistance-temperature conversion table to the terminal.

That is, as indicated in Fig. 6, a configuration may be rendered that has information designating a table be an alternative for a calibration coefficient transmitted from a tag.

This configuration is possible by, in step S03 of Fig. 1, instead of writing into a tag a calibration coefficient in advance, writing into a medium information designating a table. In this way, a value transmitted from a tag does not necessarily have to be a calibration coefficient itself, but may be a value whereby a calibration coefficient utilized in order to obtain an actual temperature may be designated.

### Embodiment Example 3

Embodiment Example 3 will be described in detail with reference to the drawings. It should be noted that with Embodiment Example 1 and Embodiment Example 2, for what corresponds to an information-recording medium, an electronic medium-e.g., a tag-was chosen and described, whereas with Embodiment Example 3, for what corresponds to an information-recording medium, a nonelectronic medium-e.g., numerals or a bar code-is adopted.

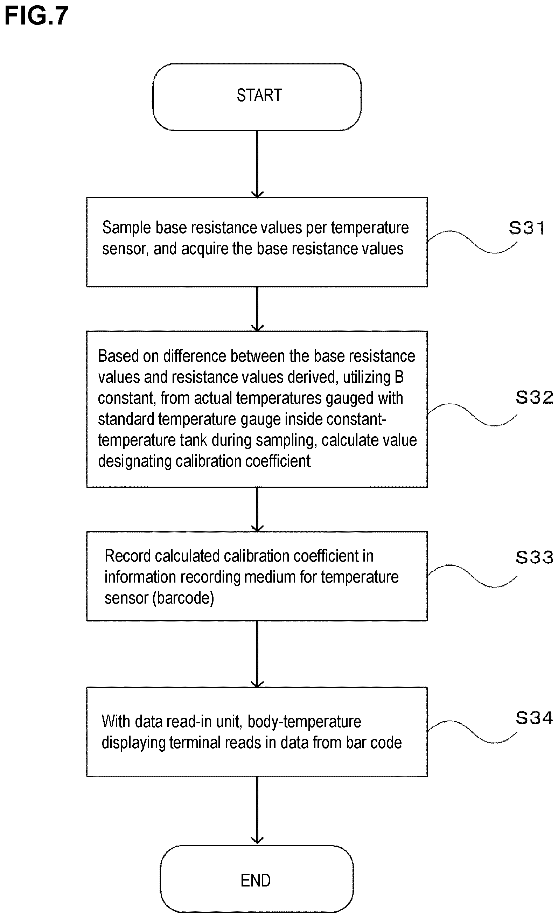

As indicated in Fig. 7, a temperature sensor 20 calibration method involving the present invention comprises: in order to sense a target subject's body temperature and measure the temperature,
a base-resistance acquisition step (S31) of sampling base resistance values on a per-temperature-sensor basis, and of acquiring the base resistance values;
a calculation step (S32) of calculating, based on the difference between the acquired base resistance values and resistance values derived, utilizing the B constant, from actual temperatures gauged with a standard temperature gauge inside a constant-temperature tank during sampling, a value designating a calibration coefficient; and
a storage step (S33) of recording the calibration coefficient in a barcode; wherein (S34) a terminal that allows a user to visually and/or auditorily check body temperature scans the barcode with its scanning unit (barcode reader) to read in the value designating a calibration coefficient.

Furthermore, in situations in which, as in Embodiment Example 2, in advance in the computation medium of the terminal 2, relationships between base resistance values and actual temperatures based on a calibration coefficient are calculated and a resistance-temperature conversion table is thereby prepared, the data-loading step may be rendered to cause, with the data-scanning unit in the terminal, the terminal to read in data-information designating the resistance-temperature conversion table-from the bar code.

It should be noted that the information-recording medium, rather than a bar code, may be rendered to be the value designating a calibration coefficient written in numerals on a package for, or instructions to, the temperature sensor, and this be input into the terminal through manual input, or be input into the terminal via character recognition (OCR).

In the foregoing, preferred embodying modes in temperature-sensor calibrating methods of the present invention have been illustrated and explained; however, it should be understood that a variety of modifications are possible without departing from the technical scope of the present invention.

### INDUSTRIAL EXPLOITABILITY

A temperature-sensor calibration method of the present invention can be exploited broadly not only in hospitals and medical treatment facilities, but also in clinical thermometers for the home.

### LIST OF REFERENCE NUMERALS

1: wearable clinical thermometer
2: terminal
10: clinical-thermometer main unit
20: temperature sensor
30: thermometer-retaining component
31: belt
32: thermometer main-unit fastening belt
S01, S21, S31: base-resistance acquisition step
S02, S22, S32: calibration-coefficient calculation step
S03, S23, S33: storage step
S04, S24, S34: data-loading step

## Claims

1. A method for calibrating a temperature sensor that fits detachably from/reattachably into a thermometer main unit of a wireless-data-communicating wearable clinical thermometer and is for sensing a target subject's body temperature and measuring the temperature, the wearable clinical thermometer being made up of a thermometer main unit, and a temperature sensor constituted from an NTC thermistor, the temperature sensor possessing a corresponding information-recording medium as a constituent element, the temperature-sensor calibrating method **characterized in** comprising:
a base-resistance acquisition step of acquiring base resistance values having been sampled on a per-temperature-sensor basis inside a constant-temperature tank;
a computation step of computing for the temperature sensor, based on the difference between said base resistance values and resistance values derived, utilizing the B constant, from actual temperatures gauged with a standard temperature gauge inside the constant-temperature tank during the sampling, a value designating a calibration coefficient;
a storage step of recording in the information-recording medium the value designating a calibration coefficient; and
a data-loading step of causing a terminal that allows a user to visually and/or auditorily check body temperature to read in the value designating a calibration coefficient from the information-recording medium.

2. The temperature-sensor calibrating method set forth in claim 1, **characterized in that**:
the information-recording medium is a tag made up of an antenna and a wireless-communications IC for transmitting radio waves via the antenna; and
said data read-in step is a step of transmitting from the tag, employing standard NFC communications protocols, to the terminal the value designating a calibration coefficient.

3. The temperature-sensor calibrating method set forth in claim 2, **characterized in that** the tag is provided either in a location of choice on the temperature sensor that fits onto the wearable clinical thermometer, or in a location of choice along a package for, or on an item packaged in, the temperature sensor that fits onto the wearable clinical thermometer.

4. The temperature-sensor calibrating method set forth in claim 1, **characterized in that** the information recording medium is a bar code, and said data-loading step is a step of causing, with a data-scanning unit in the terminal, the terminal to read in data-the value designating the calibration coefficient-from the bar code.

5. The temperature-sensor calibrating method set forth in any of claims 1 through 4, **characterized in that** in a computation medium in the terminal, based on the value designating the calibration coefficient, relationships between the base resistance values and actual temperatures are calculated to prepare a resistance-temperature conversion table, and the prepared resistance-temperature table is recorded in the information-recording medium in the terminal.

6. The temperature-sensor calibrating method set forth in claim 5, **characterized in that** the resistance-temperature conversion table is reprepared by being computed according to the value designating the calibration coefficient, and recorded in an overwritable information recording medium in the terminal.

7. The temperature-sensor calibrating method set forth in any of claims 1 through 4, **characterized in that** in the computation medium in the terminal, based on advance-estimated values designating calibration coefficients, relationships between the base resistance values and actual temperatures are calculated to prepare a plurality of resistance-temperature conversion tables, and the prepared plurality of the resistance-temperature conversion tables is recorded in the information-recording medium in the terminal.

8. The temperature-sensor calibrating method set forth in claim 7, **characterized in that** said data-loading step is carried out by transmitting from the tag, employing standard NFC communications protocols, to the terminal information designating the resistance-temperature conversion tables.

9. The temperature-sensor calibrating method set forth in claim 7, **characterized in that** said data read-in step is carried out by causing, with a data-scanning unit in the terminal, the terminal to read in data-information designating the resistance-temperature conversion tables-from the bar code.
